# EUROPEAN PATENT APPLICATION

(11) **EP 4 660 973 A1**
(43) Date of publication of application: **10.12.2025**
(21) Application number: 25181447.1
(22) Date of filing: 06.06.2025
(51) Int. Cl.: G06V 20/64, G06T 7/00

(54) **DIMENSIONALITY REDUCTION**

(30) Priority: 07.06.2024 US 202418736677
(71) Applicant: DENTSPLY SIRONA Inc., York, PA 17401 (US)
(72) Inventor: BERTLEFF, Marco, 64625 Bensheim (DE); WUNDRAK, Stefan, 64625 Bensheim (DE)
(74) Representative: Aldridge, Henry Alexander

(57) **Abstract**

Computing a central axis for a three-dimensional (3D) model, generating a number of two-dimensional (2D) slices from the 3D model, the central axis passing through each of the 2D slices, and 2D points of the plurality of 2D slices corresponding to 3D points from the 3D model via a 2D point - 3D point correspondence. The method also includes computing 3D information about the 3D model by proposing for each 2D slice of the plurality of 2D slices, using a trained ML model, 2D information about the 2D slice using the 2D slice as input, to obtain a plurality of 2D information for the plurality of 2D slices, and converting the plurality of 2D information to the 3D information about the 3D model based on the 2D point - 3D point correspondence.

## Description

### Technical Field

The present disclosure pertains to dimensionality reduction, and more specifically to computing information about a 3D data by reducing the 3D data to 2D data, obtaining corresponding 2D information and converting the 2D information to 3D information.

### Description of the Related Art

Three-dimensional (3D) data sets are available in various fields ranging from computer graphics to scientific research, medicine, and engineering. Unlike traditional two-dimensional (2D) data, 3D data captures spatial information along three axes, offering a more comprehensive representation of the underlying phenomena or objects.

3D data can encompass various forms such as forms that capture spatial information along three axes, or forms that contain three different dimensions of data. Point clouds, derived from LiDAR or photogrammetry, comprise points representing object features. Meshes represent surface geometry through vertices, edges, and faces, pivotal in computer graphics and simulations. Volumetric data, organized in grids or voxels, describes properties within a 3D space, prevalent in dental imaging, medical imaging, and scientific simulations. 3D images, captured from multiple viewpoints, enable depth perception, finding applications in augmented reality, virtual reality, dental and medical visualization. Computer-aided design (CAD) models, digital representations of physical objects, facilitate design and prototyping in engineering and architecture. Some 3D data types evolve over time, such as 4D medical imaging and dynamic simulations. Each type presents unique challenges and applications, driving specialized algorithm development for processing, analysis, and visualization. Understanding these diverse forms of 3D data is crucial for effectively leveraging them in fields ranging from urban planning to medical research and beyond.

### BRIEF SUMMARY

According to one aspect, a method involves computing a central axis for a three-dimensional (3D) model and generating multiple two-dimensional (2D) slices from this model, where each slice intersects the central axis. Points on these 2D slices are directly correlated to specific 3D points on the model, ensuring accurate representation in two dimensions. The method further includes processing each 2D slice through a trained machine learning (ML) model to propose detailed 2D information, which is then converted back to 3D information about the model based on the established 2D to 3D point correspondence. The number of 2D slices used for obtaining labels to train the ML model can be independent of the number of 2D slices used to generate predictions at processing time. The number of 2D slices for obtaining labels is chosen to optimize training data quality and the labelling process. The number of 2D slices at processing time is chosen to ensure comprehensive coverage and detail of the 3D model without redundancy.

In an aspect of the method, the three-dimensional (3D) information about the 3D model comprises a portion of the 3D model that fully or partially surrounds the central axis. This allows for a comprehensive analysis of the 3D structure by ensuring that the data extracted and analyzed from the 2D slices include significant features of the 3D model surrounding the central axis. This may allow for applications such as detailed medical imaging analyses, where understanding the context and environment around a central point of interest (e.g., a tooth's central axis in dental imaging) can provide critical insights into the condition being assessed.

According to another aspect, a computing apparatus is equipped with a processor and memory that, when executing stored instructions, performs a method for analyzing three-dimensional (3D) models by generating two-dimensional (2D) slices. These slices are processed to compute 2D information about the model, utilizing a trained ML model to propose data for each 2D slice, which is then converted back to 3D information based on predefined correspondence between 2D and 3D points.

According to another aspect, a non-transitory computer-readable storage medium includes instructions that, when executed by a computer, enable the computation of a central axis for a three-dimensional (3D) model and the generation of multiple two-dimensional (2D) slices from this model, with each slice intersecting the central axis. The 2D points or locations or properties on these slices correspond to 3D points or locations or properties on the model, maintaining spatial accuracy. The instructions further allow for the computation of 3D information about the model by processing each 2D slice through a trained ML model to gather 2D information, which is then converted back to 3D data based on the established point correspondence.

### BRIEF DESCRIPTION OF THE DRAWINGS

To easily identify the discussion of any particular element or act, the most significant digit or digits in a reference number refer to the figure number in which that element is first introduced.
FIG. 1 depicts a block diagram of a network of data processing systems in accordance with an illustrative embodiment.
FIG. 2 depicts a block diagram of a data processing system in accordance with an illustrative embodiment.
FIG. 3 illustrates a routine 300 in accordance with one embodiment.
FIG. 4 depicts a client in accordance with an illustrative embodiment.
FIG. 5A depicts a cross section of a tooth in accordance with an illustrative embodiment.
FIG. 5B depicts a 3D model of a tooth illustrating a cemento-enamel junction (CEJ) and an alveolar crest (AC) level around a tooth in accordance with an illustrative embodiment.
FIG. 5C depicts a sketch of 2D images illustrating a CEJ and an AC level at two sides of a tooth in accordance with an illustrative embodiment.
FIG. 6 depicts a block diagram of an example configuration for intelligent proposal of present conditions and in accordance with an illustrative embodiment.
FIG. 7A depicts a sketch illustrating cross section lines in accordance with an illustrative embodiment.
FIG. 7B depicts a sketch illustrating 2D slices generated based on FIG. 7A in accordance with an illustrative embodiment.
FIG. 8 depicts a block diagram of an example training architecture for machine-learning based recommendation engine with an illustrative embodiment.

### DETAILED DESCRIPTION

### Overview

In the following detailed description, numerous specific details are set forth by way of examples to provide a thorough understanding of the relevant teachings. However, it should be apparent that the present teachings may be practiced without such details. In other instances, well-known methods, procedures, and/or components have been described at a relatively high level, without detail, to avoid unnecessarily obscuring aspects of the present teachings.

The illustrative embodiments recognize that solutions to tasks in 3D space may be frequently needed, however the process of obtaining the solutions may be resource intensive, as the relatively high dimensionality of the tasks may remain the same (remains in 3D) during the process. For example, the detection and diagnosis of periodontal bone loss are critical for effective dental care and treatment planning. This may typically be achieved through visual examination and conventional radiographic methods, which rely heavily on the expertise and subjective judgment of dental professionals. These methods, while useful, often suffer from limitations such as variability in diagnostic accuracy and the potential for human error. Further, there may be an inability to reliably obtain values of bone loss at all angles around the tooth. In another example, measuring physical or biological properties of a spine may encompass obtaining continuous 3D values of the property around a central axis of the spine. This may not be practical to perform in 3D space or at best, resource intensive.

The illustrative embodiments implement computing a central axis for a three-dimensional model and generating multiple two-dimensional slices from the model, with each slice intersecting the central axis. The slices maintain a correspondence between two-dimensional points and their originating three-dimensional points. The illustrative embodiments disclose analyzing each two-dimensional slice using a trained ML model to propose slice-specific information, which may then be aggregated and transformed back into a comprehensive three-dimensional context based on the established point correspondences.

The illustrative embodiments are described with respect to certain types of machines. The illustrative embodiments are also described with respect to other scenes, subjects, measurements, devices, data processing systems, environments, components, and applications only as examples. Any specific manifestations of these and other similar artifacts are not intended to be limiting to the disclosure. Any suitable manifestation of these and other similar artifacts can be selected within the scope of the illustrative embodiments.

Furthermore, the illustrative embodiments may be implemented with respect to any type of data, data source, or access to a data source over a data network. Any type of data storage device may provide the data to an embodiment of the disclosure, either locally at a data processing system or over a data network, within the scope of the disclosure. Where an embodiment is described using a mobile device, any type of data storage device suitable for use with the mobile device may provide the data to such embodiment, either locally at the mobile device or over a data network, within the scope of the illustrative embodiments.

The illustrative embodiments are described using specific code, hardware, algorithms, designs, architectures, protocols, layouts, schematics, and tools only as examples and are not limiting to the illustrative embodiments. Furthermore, the illustrative embodiments are described in some instances using particular software, tools, and data processing environments only as an example for the clarity of the description. The illustrative embodiments may be used in conjunction with other comparable or similarly purposed structures, systems, applications, or architectures. For example, other comparable devices, structures, systems, applications, or architectures therefor, may be used in conjunction with such embodiment of the disclosure within the scope of the disclosure. An illustrative embodiment may be implemented in hardware, software, or a combination thereof.

The examples in this disclosure are used only for the clarity of the description and are not limiting to the illustrative embodiments. Additional data, operations, actions, tasks, activities, and manipulations will be conceivable from this disclosure and the same are contemplated within the scope of the illustrative embodiments.

Any advantages listed herein are only examples and are not intended to be limiting to the illustrative embodiments. Additional or different advantages may be realized by specific illustrative embodiments. Furthermore, a particular illustrative embodiment may have some, all, or none of the advantages listed above.

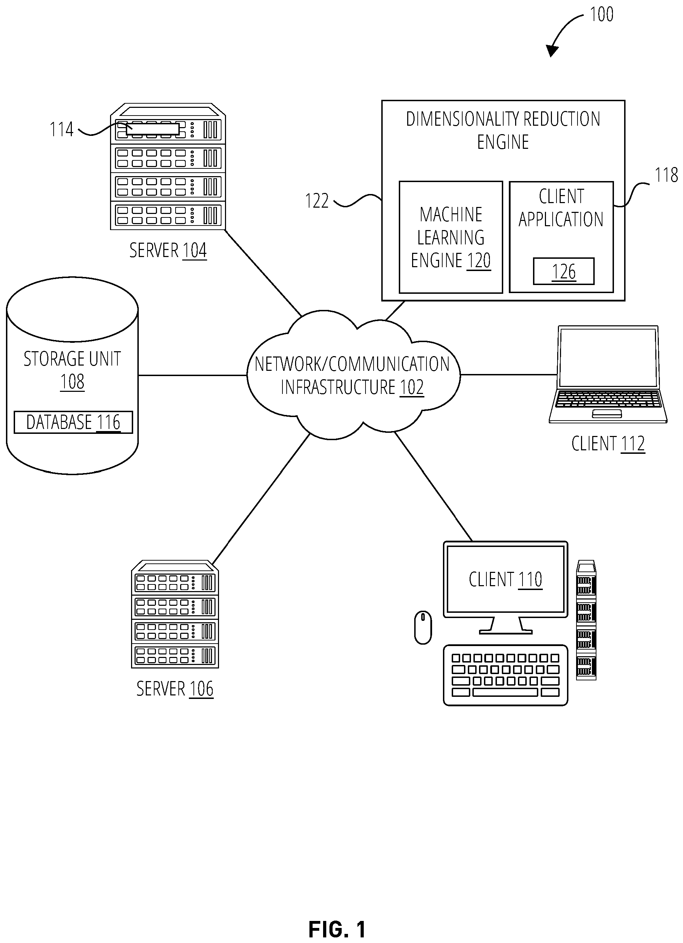

FIG. 1 depicts a block diagram of an environment of data processing systems in which illustrative embodiments may be implemented. Data processing environment 100 is a network of computers in which the illustrative embodiments may be implemented. Data processing environment 100 includes network/communication infrastructure 102. Network/communication infrastructure 102 is the medium used to provide communications links between various devices, databases and computers connected together within data processing environment 100. Network/communication infrastructure 102 may include connections, such as wire, wireless communication links, or fiber optic cables.

Clients or servers are only example roles of certain data processing systems connected to network/communication infrastructure 102 and are not intended to exclude other configurations or roles for these data processing systems. Server 104 and server 106 couple to network/communication infrastructure 102 along with storage unit 108. Software applications may execute on any computer in data processing environment 100. Client 110, client 112 are also coupled to network/communication infrastructure 102. A data processing system, such as server 104 or server 106, or clients (client 110, client 112) may include data and may have software applications or software tools executing thereon.

Only as an example, and without implying any limitation to such architecture, FIG. 1 depicts certain components that are usable in an example implementation of an embodiment. For example, servers and clients are only examples and do not to imply a limitation to a client-server architecture. As another example, an embodiment can be distributed across several data processing systems and a data network as shown, whereas another embodiment can be implemented on a single data processing system within the scope of the illustrative embodiments. Data processing systems (server 104, server 106, client 110, client 112) also represent example nodes in a cluster, partitions, and other configurations suitable for implementing an embodiment.

Dimensionality reduction engine 122, client application 118 or server application 114 can implement an embodiment described herein. Client application 118 and/or server application 114 can use data from dimensionality reduction engine 122 for dimensionality reduction. Client application 118 can also execute in any of data processing systems (server 104 or server 106, client 110, client 112), such as client server application 114 in server 104.

ML engine 120 may propose 2D information about 2D data (e.g., 2D slices) obtained from a 3D model for subsequent conversion into 3D information 126 about 3D data (e.g., 3D information about a 3D model, CBCT data, MRI, X-ray, etc.). ML engine 120 may be a part of, or separate from dimensionality reduction engine 122, server 104 or clients 110 and 112. The ML engine 120 may be trained based on a plurality of 2D data.

Server 104, server 106, storage unit 108, client 408, client 110, client 112, may couple to network/communication infrastructure 102 using wired connections, wireless communication protocols, or other suitable data connectivity. Client 408, client 110 and client 112 may be, for example, personal computers or network computers.

In the depicted example, server 104 may provide data, such as boot files, operating system images, and applications to client 110, and client 112. Client 110 and client 112 may be clients to server 104 in this example. Client 110 and client 112 or some combination thereof, may include their own data, boot files, operating system images, and applications. Data processing environment 100 may include additional servers, clients, and other devices that are not shown. Server 104 includes the server application 114 that may be configured to implement one or more of the functions described herein for displaying restoration proposals in accordance with one or more embodiments.

Server 106 may include a search engine configured to search stored files such as images of patient teeth for comparison in response to a request for detecting tooth defects. In the depicted example, data processing environment 100 may be the Internet. Network/communication infrastructure 102 may represent a collection of networks and gateways that use the Transmission Control Protocol/Internet Protocol (TCP/IP) and other protocols to communicate with one another. At the heart of the Internet is a backbone of data communication links between major nodes or host computers, including thousands of dental practices, commercial, governmental, educational, and other computer systems that route data and messages. Of course, data processing environment 100 also may be implemented as a number of different types of networks, such as for example, an intranet, a local area network (LAN), or a wide area network (WAN). FIG. 1 is intended as an example, and not as an architectural limitation for the different illustrative embodiments.

Among other uses, data processing environment 100 may be used for implementing a client-server environment in which the illustrative embodiments may be implemented. A client-server environment enables software applications and data to be distributed across a network such that an application functions by using the interactivity between a client data processing system and a server data processing system. Data processing environment 100 may also employ a service-oriented architecture where interoperable software components distributed across a network may be packaged together as coherent business applications. Data processing environment 100 may also take the form of a cloud, and employ a cloud computing model of service delivery for enabling convenient, on-demand network access to a shared pool of configurable computing resources (e.g. networks, network bandwidth, servers, processing, memory, storage, applications, virtual machines, and services) that can be rapidly provisioned and released with minimal management effort or interaction with a provider of the service.

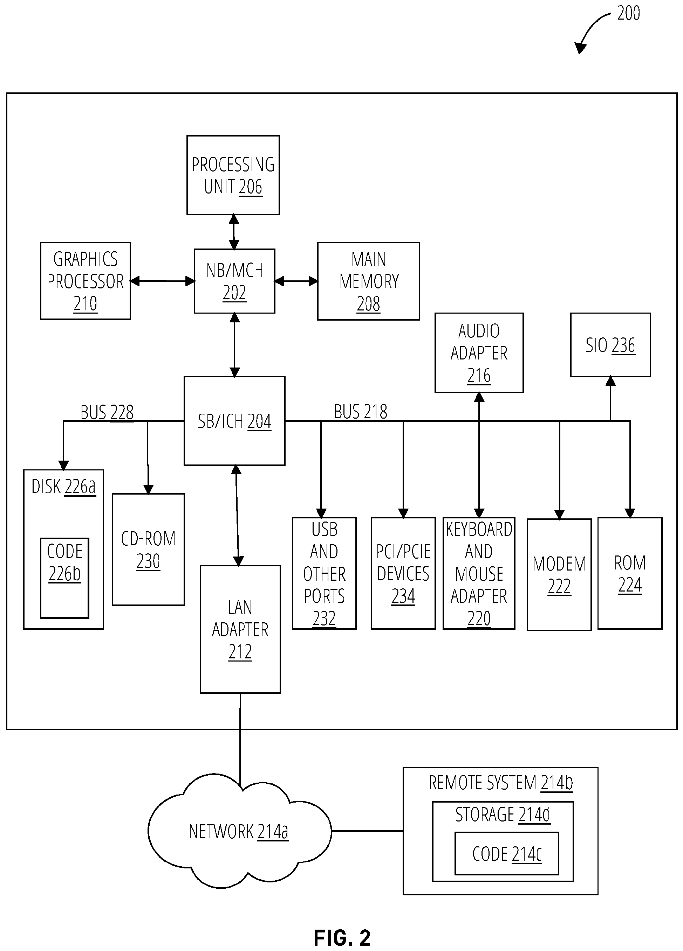

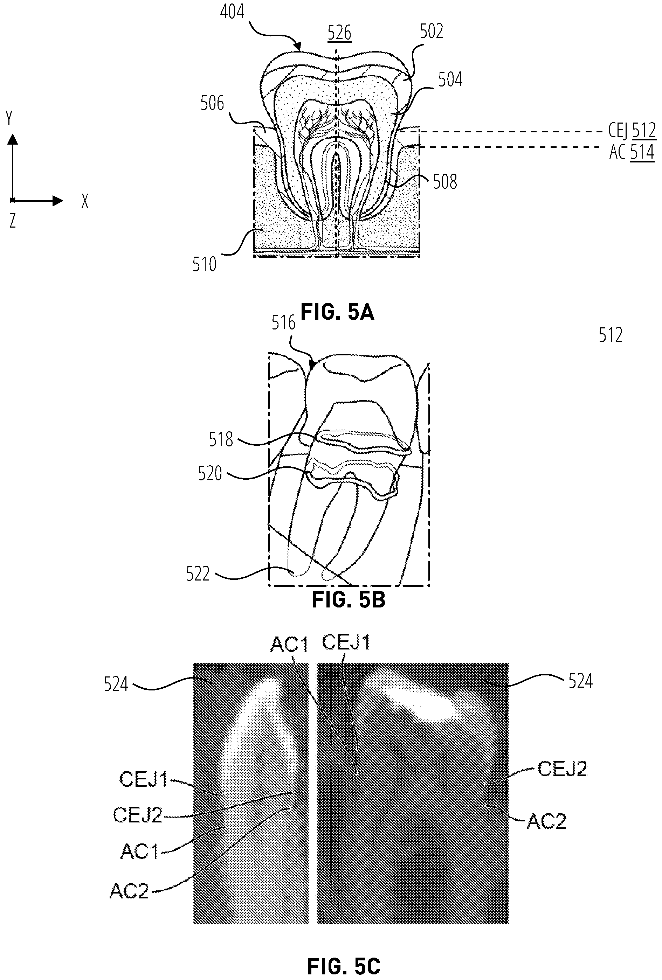

With reference to FIG. 2, this figure depicts a block diagram of a data processing system in which illustrative embodiments may be implemented. Data processing system 200 is an example of a computer, such client 110, client 112, or server 104, server 106, in FIG. 5A, or another type of device in which computer usable program code or instructions implementing the processes may be located for the illustrative embodiments.

Data processing system 200 is described as a computer only as an example, without being limited thereto. Implementations in the form of other devices, may modify data processing system 200, such as by adding a touch interface, and even eliminate certain depicted components from data processing system 200 without departing from the general description of the operations and functions of data processing system 200 described herein.

In the depicted example, data processing system 200 employs a hub architecture including North Bridge and memory controller hub (NB/MCH) 202 and South Bridge and input/output (I/O) controller hub (SB/ICH) 204. Processing unit 206, main memory 208, and graphics processor 210 are coupled to North Bridge and memory controller hub (NB/MCH) 202. Processing unit 206 may include one or more processors and may be implemented using one or more heterogeneous processor systems. Processing unit 206 may be a multi-core processor. Graphics processor 210 may be coupled to North Bridge and memory controller hub (NB/MCH) 202 through an accelerated graphics port (AGP) in certain implementations.

In the depicted example, local area network (LAN) adapter 212 is coupled to South Bridge and input/output (I/O) controller hub (SB/ICH) 204. Audio adapter 216, keyboard and mouse adapter 220, modem 222, read only memory (ROM) 224, universal serial bus (USB) and other ports 232, and PCI/PCIe devices 234 are coupled to South Bridge and input/output (I/O) controller hub (SB/ICH) 204 through bus 218. Hard disk drive (HDD) or solid-state drive (SSD) 226a and CD-ROM 230 are coupled to South Bridge and input/output (I/O) controller hub (SB/ICH) 204 through bus 228. PCI/PCIe devices 234 may include, for example, Ethernet adapters, add-in cards, and PC cards for notebook computers. PCI uses a card bus controller, while PCIe does not. Read only memory (ROM) 224 may be, for example, a flash binary input/output system (BIOS). Hard disk drive (HDD) or solid-state drive (SSD) 226a and CD-ROM 230 may use, for example, an integrated drive electronics (IDE), serial advanced technology attachment (SATA) interface, or variants such as external-SATA (eSATA) and micro- SATA (mSATA). A super I/O (SIO) device 236 may be coupled to South Bridge and input/output (I/O) controller hub (SB/ICH) 204 through bus 218.

Memories, such as main memory 208, read only memory (ROM) 224, or flash memory (not shown), are some examples of computer usable storage devices. Hard disk drive (HDD) or solid-state drive (SSD) 226a, CD-ROM 230, and other similarly usable devices are some examples of computer usable storage devices including a computer usable storage medium.

An operating system runs on processing unit 206. The operating system coordinates and provides control of various components within data processing system 200 in FIG. 2. The operating system may be a commercially available operating system for any type of computing platform, including but not limited to server systems, personal computers, and mobile devices. An object oriented or other type of programming system may operate in conjunction with the operating system and provide calls to the operating system from programs or applications executing on data processing system 200.

Instructions for the operating system, the object-oriented programming system, and applications or programs, such as server application 114 and client application 118 in FIG. 1, are located on storage devices, such as in the form of codes 226b on Hard disk drive (HDD) or solid-state drive (SSD) 226a, and may be loaded into at least one of one or more memories, such as main memory 208, for execution by processing unit 206. The processes of the illustrative embodiments may be performed by processing unit 206 using computer implemented instructions, which may be located in a memory, such as, for example, main memory 208, read only memory (ROM) 224, or in one or more peripheral devices.

Furthermore, in one case, code 226b may be downloaded over network 214a (such as network/communication infrastructure 102) from remote system 214b, where similar code 214c is stored on a storage device 214d in another case, code 226b may be downloaded over network 214a to remote system 214b, where downloaded code 214c is stored on a storage device 214d.

A communications unit may include one or more devices used to transmit and receive data, such as a modem or a network adapter. A memory may be, for example, main memory 208 or a cache, such as the cache found in North Bridge and memory controller hub (NB/MCH) 202. A processing unit may include one or more processors or CPUs.

Where a computer or data processing system is described as a virtual machine, a virtual device, or a virtual component, the virtual machine, virtual device, or the virtual component operates in the manner of data processing system 200 using virtualized manifestation of some or all components depicted in data processing system 200. For example, in a virtual machine, virtual device, or virtual component, processing unit 206 is manifested as a virtualized instance of all or some number of hardware processing units 206 available in a host data processing system, main memory 208 is manifested as a virtualized instance of all or some portion of main memory 208 that may be available in the host data processing system, and Hard disk drive (HDD) or solid-state drive (SSD) 226a is manifested as a virtualized instance of all or some portion of Hard disk drive (HDD) or solid-state drive (SSD) 226a that may be available in the host data processing system. The host data processing system in such cases is represented by data processing system 200.

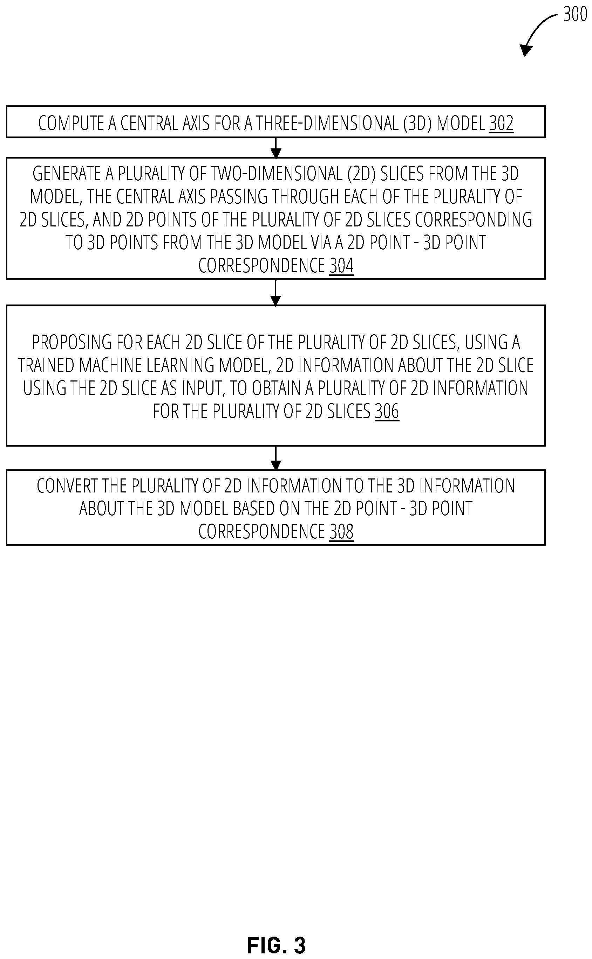

Turning to FIG. 3, the dimensionality reduction engine 122 will be further discussed. In one aspect, the dimensionality reduction engine 122 can be engaged to perform a routine 300 that includes computing a central axis for a three-dimensional (3D) model (block 302). The 3D model may generally be 3D data such as data with three dimensions, or 3D structured medical imaging data (e.g., voxels) that has a near radial symmetry. Examples may include teeth, the spine, bones of extremities, etc.

In block 302, the dimensionality reduction engine 122 generates a plurality of two-dimensional (2D) slices from the 3D model, the central axis passing through each of the plurality of 2D slices, and 2D points of the plurality of 2D slices corresponding to 3D points from the 3D model via a 2D point - 3D point correspondence. In other words, upon slicing through the object a number of times through the identified central axis, points in 3D related to a problem/task being solved appear in each 2D slice. Generating the slices may include resampling. More specifically, in a 3D volume, e.g., for CBCT, the 3D volume may comprise voxel data or other similar 3D data. Upon generating a 2D slice with an angle that is not aligned to the voxel grid of the 3D volume, a resampling may be needed for the 2D slice because then one pixel/point in two dimensions can be a combination of two or more voxels of the 3D volume. The total number, N, of the plurality of 2D slices may be selected independently a) for the purpose of obtaining labels to train the ML model (N_{label}) and b) for the purpose of processing the 3D model by generating ML predictions on each 2D slice (N_{proc}). For N_{label} it may be beneficial to select a low number, even as low as one, to achieve a high diversity of the labelled training data for a given labelling effort. That is assuming multiple slices of a single 3D model are to some extent correlated. Higher numbers for N_{label} may be beneficial to increase training data if the total number of 3D models available for training is limited. For N_{proc} a low number may be beneficial for complexity reduction or runtime optimization. High numbers for N_{proc} may be beneficial for high accuracy of the 3D model representation. 2D ML architectures typically feature substantially lower memory consumption than their 3D equivalent. Further, generating ML predictions on the plurality of 2D slices may be parallelized and distributed over multiple computing devices. Thus, even with high N_{proc}, processing in 2D using 2D ML architectures may result in substantial benefits over processing in 3D using 3D ML architectures. For example, the number may be as high as the number, that results in the distance between two points of interest on adjacent slices is equal to the resolution of the 3D model.

Upon generating the plurality of 2D slices, 3D information 126 about a task or problem related to the 3D model may be obtained by solving the problem on the plurality of 2D slices, rather than on the 3D model and converting the solution back into 3D using the 2D point - 3D point correspondence. In an embodiment, the 3D information 126 is a measurement of the 3D model in 3D form. The information about the 3D model can comprise a portion of the 3D model that at least partially or fully surrounds (e.g., circumscribes, encloses, bounds etc.) the central axis.

Thus, in block 306, the dimensionality reduction engine 122 may propose for each 2D slice of the plurality of 2D slices, via the ML engine 120, 2D information about the 2D slice using the 2D slice as input, to obtain a plurality of 2D information for the plurality of 2D slices. The plurality of 2D information is then converted in block 308 to the 3D information 126 about the 3D model based on the 2D point - 3D point correspondence. The 2D information can be a measurable property of the 2D slice, such as a length, breadth, location of point or group of points, etc.

In an embodiment, the ML engine 120 comprises a trained ML model that is first trained using a plurality of 2D training slices obtained from 3D training models as training inputs and a plurality of 3D training information 126 about the 2D training slices as training outputs. The training may be performed without using a 3D neural network architecture for ML model. Making predictions for a given task on 3D data using a neural network may conventionally require the acquisition of corresponding labels in 3D as well as the implementation of a 3D neural network architecture for the training of an appropriate ML model. By the dimensionality reduction engine 122 reducing the dimensionality of an ML problem from 3D to 2D (spatial dimensions) through exploiting radial symmetry or a central axis, may result in significant savings in time and costs for labelling of the training data. Further, a resulting ML model having a 2D neural network architecture has a shorter runtime and lower hardware demands both during training and prediction compared to a corresponding ML model having a 3D neural network architecture that yields equivalent predictions. This difference is apparent when comparing 2D and 3D versions of various ML model architectures such as the widely used U-Net. In 3D the higher dimensionality of the so-called feature maps and e.g. the typical convolution operations lead to a much higher memory consumption and runtime than in 2D at an equal size of the individual dimensions.

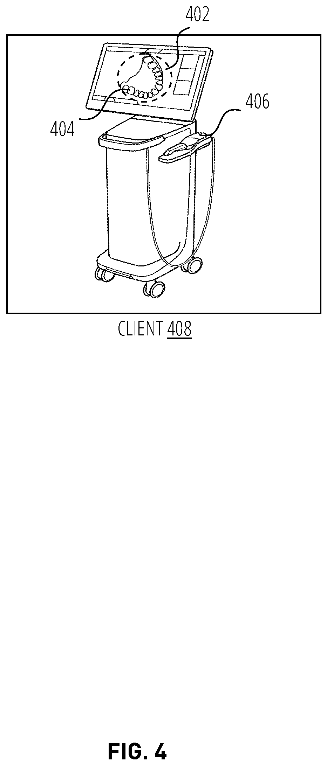

FIG. 4 depicts a sketch of an example client in accordance with an illustrative embodiment. Client 408 may be an example of client 110 or client 112 and may be coupled to network/communication infrastructure 102. In an embodiment, Client 408 is a dental acquisition unit with a display showing a 3D model 402, a tooth 404. Client 408 may further comprise an intra-oral camera 406. In another embodiment, client 408 is a medical device for visualizing images of a spine, or other 3D model.

Dimensionality reduction engine 122, client application 118 and/or server application 114 can use data from client 408 for dimensionality reduction. ML engine 120 may be a part of or separate from client 408.

Turning now to FIG. 5A -FIG. 5C, an embodiment illustrating dimensionality reduction is illustrated. FIG. 5A illustrates a cross section of a tooth 404 that passes through a central axis 526 of the tooth 404 and shows an enamel 502, a dentin 504, a gingiva 506, a cementum 508, and an alveolar bone 510. The cementum 508 is disposed between the dentin 504 and the gingiva 506. FIG. 5A further illustrates a cemento-enamel junction (CEJ 512) and a level of an alveolar crest (AC 514). It is recognized that the CEJ 512 and AC 514 of a tooth 404 on a cone beam computed tomography (CBCT) or other 3D model 402, may be used for the assessment of periodontal bone loss (PBL).

In 3D space both CEJ 512 and AC 514 may be described by closed 3D lines around the tooth (See 3D CEJ information 518 and 3D AC information 520 of FIG. 5B). On a 2D slice 524 (FIG. 5C) through the central axis 526 of the tooth, CEJ 512 and AC 514 are given as a pair of points on each side of the tooth 404 where the 2D slice 524 intersects the respective 3D lines. For a 3D assessment of PBL, there may be a desire to determine both 3D lines or 3D information 126 (3D CEJ information 518 and 3D AC information 520) such that a greatest bone loss that occurs around the tooth 404 can be detected.

It is recognized that generating PBL information may be performed automatically via an ML approach, wherein instead of considering it a 3D problem, the radial symmetry of a tooth around a central axis may be exploited to solve the problem in two dimensions. By training a neural network on 2D slices 524, a plurality of 2D information from the neural network can be obtained for conversion into the 3D CEJ information 518 and 3D AC information 520. Further inference can be performed by first decomposing the 3D model 402 into many 2D slices 524, using the neural network to obtain the 2D information for each 2D slice 524 (CEJ 512 and AC 514 on each side of the tooth 404) and finally reconstructing the 3D CEJ information 518 and 3D AC information 520 from the plurality of 2D results.

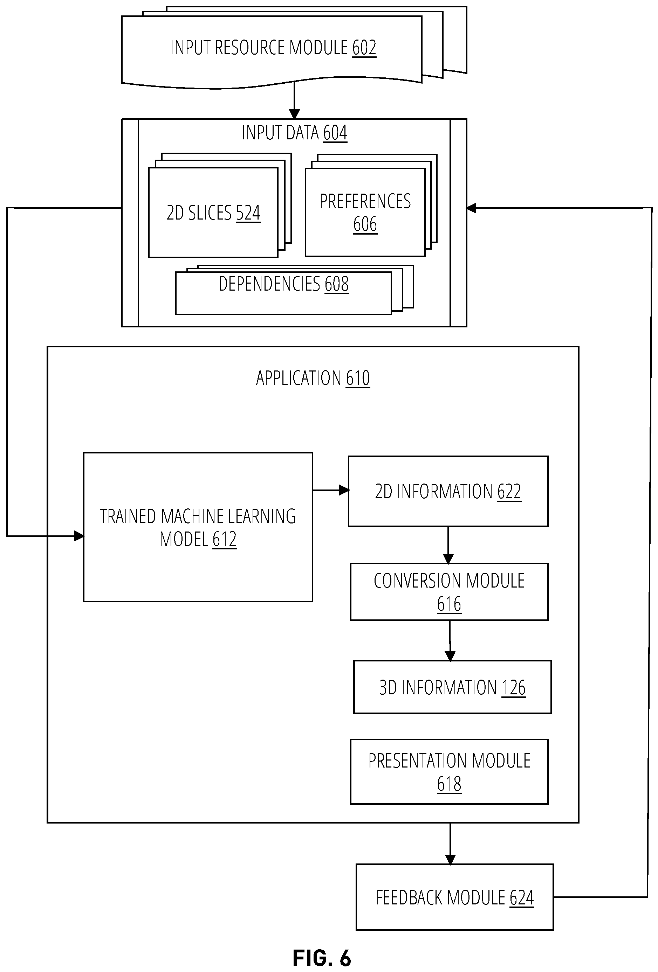

With reference to FIG. 6, this figure depicts a block diagram of an example configuration for dimensionality reduction in accordance with an illustrative embodiment. Application 610 is an example of any of server applications 114 or client application 118 in FIG. 1 or any other application, depending on the particular implementation.

In one aspect, application 610 may receive 2D slices 524 as input data 604. In another aspect, the dimensionality reduction engine 122 may receive the 3D model 402 or other three-dimensional (3D) data, and generate or identify, by an input resource module 602, a central axis 526 for the 3D model 402 responsive to which the dimensionality reduction engine 122 further generates a plurality of 2D slices 524 from the 3D model, the central axis passing through each of the 2D slices 524, and 2D points of the plurality of 2D slices corresponding to some 3D points from the 3D model via a 2D point - 3D point correspondence. In an embodiment, a predetermined optimal number of slices is obtained for the 3D model 402 and this optimal number of 2D slices 524 is generated. The 2D slices 524 may then be provided for use as input data 604 to the application 610.

Even further, the input resource module 602 may receive the 3D model 402, compute from the 3D model 402 characteristics of the 3D model 402 or characteristics of a task to be performed on 3D model 402 as dependencies 608. Such dependencies 608 may include, for example, a tooth number, information about a spine, a patient specific characteristic etc. Further preferences 606 may be obtained for use as inputs, though preferences 606 and dependencies 608 can be optional.

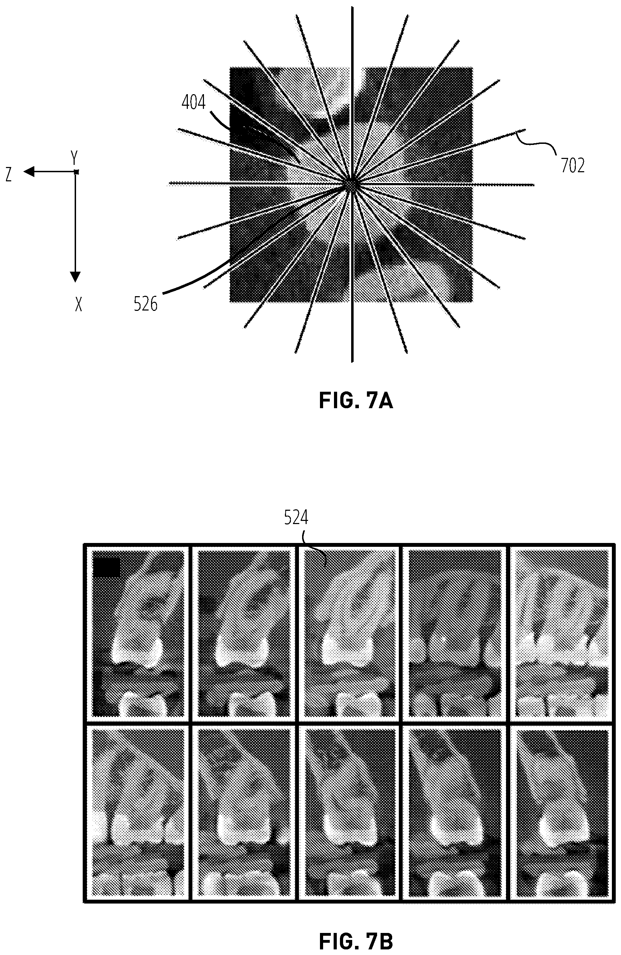

The input data 604 may be used as input for a trained ML model 612 and the trained ML model 612 may then propose for each 2D slice 524 of the plurality of 2D slices 524, 2D information 622 about the 2D slice 524 to obtain a plurality of 2D information 622 for the plurality of 2D slices 524. This may be performed iteratively or at the same time based on the training of the ML model. In an example inference with the trained ML model 612 and a predetermined number of slices of N = 10 for each sample, the trained ML model 612 proposes points of CEJ 512 and AC 514 on each 2D slice 524. FIG. 7A illustrates a top view showing ten cross section lines 702 passing through the central axis 526 which may be parallel to the Y-axis in the example of FIG. 7A. The ten cross section lines 702 represent the position of slices through the central axis 526 and thus produce the ten corresponding 2D slices 524 of FIG. 7B for use as inputs to the trained ML model 612.

In an embodiment, the trained ML model 612 may be configured to include a feature extraction component that may generate relevant features for a proposal based on data from all the different available inputs (e.g., 2D slices 524, preferences 606, dependencies 608). The feature extraction component may be part of the trained ML model 612,. In other embodiments, the feature extraction component may be a feature selection component and may be separate from the trained ML model 612. The feature extraction component may use a defined algorithm of prioritization or dependencies to generate the features for the proposal of the 2D information 622.

A conversion module 616 converts the plurality of 2D information 622 to the 3D information 126 about the 3D model 402 or tooth 404 based on the 2D point - 3D point correspondence. In some embodiments, the 2D information 622 and/or 3D information 126 can be interpolated between adjacent slices. For example, the 2D CEJ and 2D AC of the plurality of slices are converted to the 3D CEJ and 3D AC around the central axis of the tooth by interpolating between adjacent slices. The 3D PBL can be assessed by computing for each pair of 2D locations of the CEJ and AC on a side of the tooth a distance between the pair in relation to the distance from the 2D CEJ location to a root tip of the tooth, and using the highest relative distance from the results as an indication of a maximum PBL.

In another embodiment, other objects such as the spine, other biological objects exhibiting radial symmetry as described herein, parts of an assembly line, or an inanimate manufacturing object, and not necessarily a tooth, may be similarly assessed by methods herein. Any object having a central axis wherein for each slice through the central axis, a desired 2D information partially representative of a desired 3D information can be obtained may be utilized for dimensionality reduction as discussed herein.

The trained ML model 612 can be based, for example, on an artificial neural network (ANN) such as a convolutional neural network (CNN), though it is not meant to be limiting. It may be a feed-forward CNN which in a classic form may comprise one or more convolutional layers, followed by pooling layers. The CNN is trained by optimizing the learnable parameters via backpropagation based on a plurality of training data.

Another ML model may be further trained to detect a root tip 522 using training images labelled with root tips 522.

Using the 3D information 126 and the root tip 522, the periodontal bone loss (PBL) may be obtained calculating a plurality of distances based on virtual 2D planes of 2D slices from the CEJ 512 to the AC 514 in relation to the distance from the CEJ 512 to a root tip 522 of the tooth. In other words, the larger the distance between the 3D CEJ information 518 and the 3D AC information 520, in relation to the distance of the corresponding root tip 522, the higher the PBL. Instead of obtaining the values for just the 10 slices, the values can be easily obtained for all possible slices around the tooth due to the availability of the 3D information 126. PBL is a biomarker and strong indicator of periodontitis.

A training of a model into the trained ML model 612 according to an illustrative embodiment is discussed hereinafter. In an illustrative embodiment, a presentation module 618 of application 610 displays the 3D information 126 obtained from the trained ML model 612. Feedback module 624 may further collect user feedback 606 indicative of an accuracy of the 2D information 622.

The neural network may be trained using various types of training data sets. The training may include using a training dataset that comprises at least input training 2D slices and corresponding output training 2D information. The training input and output may be obtained or computed from a plurality of existing teeth or objects or via expert analysis. A test and validation dataset including input test/validation 2D slices and corresponding output test/validation 2D information may also be used to test and validate the model.

In an example, labels of CEJ and AC points may be obtained on one or more 2D slices through the central axis of a large number of teeth on CBCTs in an annotation campaign with expert dental radiologists, while labelling in 2D may save a substantial amount of time as compared to labelling in 3D. Using these labels, a 2D ML model (ML model with a 2D deep neural network architecture) is trained to detect CEJs and ACs while minimizing an average deviation/distance of the detected CEJs and ACs from ground truth. Another ML model may also be trained for root tip detection, in combination with which an automatic 3D estimation of the radiographic PBL can be generated. In clinical practice the largest distance between CEJ and AC relative to the distance between CEJ and the corresponding root tip is typically the most relevant and reported as the maximum PBL, which can only reliably be determined, if all values around the tooth are available as enabled by this method.

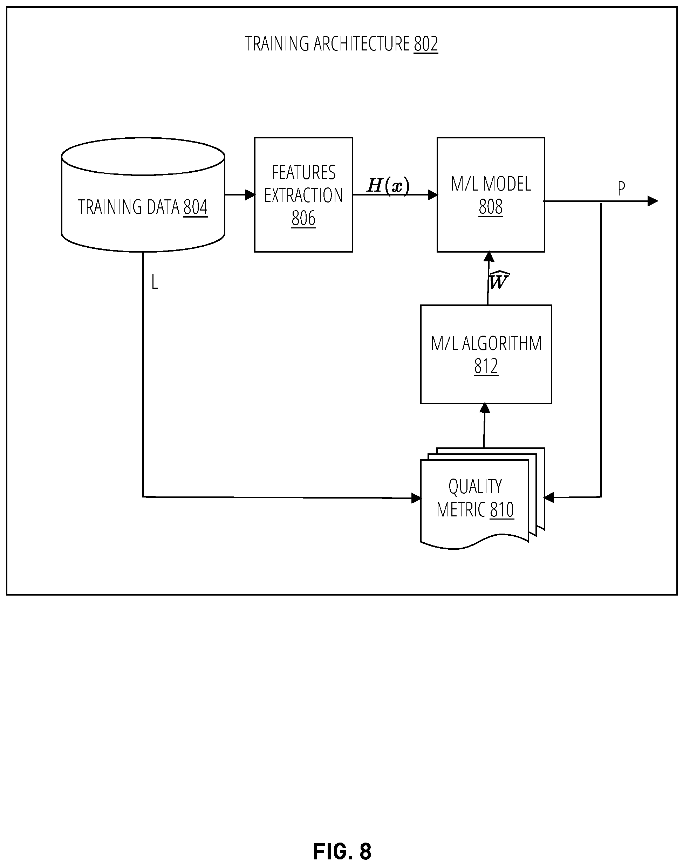

FIG. 8 shows an example training architecture 802 for machine-learning based proposal generation in accordance with an illustrative embodiment. Herein, program code extracts various features/attributes 806 from training data 804 with the training data entries having labels L. The features are utilized to develop a predictor function, H(x) or a hypothesis, which the program code utilizes as an ML model 808. In identifying various features/attributes in the training data 804, the program code may utilize various techniques including, but not limited to, mutual information, which is an example of a method that can be utilized to identify features in an embodiment. Other embodiments may utilize varying techniques to select features, including but not limited to, principal component analysis, diffusion mapping, a Random Forest, and/or recursive feature elimination (a brute force approach to selecting features), to select the features. "P" is the output (e.g., restoration materials parameters and/or probabilities) that can be obtained, which when received, could further trigger the dimensionality reduction engine 122 to perform other steps such as converting the 2D information into 3D information. The program code may utilize an ML algorithm 812 to train ML model 808, including providing weights for the outputs, so that the program code can prioritize various changes based on the predictor functions that comprise the ML model 808. The output can be evaluated by a quality metric 810.

By selecting a diverse set of training data 804, the program code trains ML model 808 to identify and weight various attributes of patients, practitioners, devices connected to the dental system, etc. To utilize the ML model 808, the program code obtains (or derives) input data or features to generate an array of values to input into input neurons of a neural network.

Thus, a computer implemented method, system or apparatus, and computer program product are provided in the illustrative embodiments for dimensionality reduction and other related features, functions, or operations. Where an embodiment or a portion thereof is described with respect to a type of device, the computer implemented method, system or apparatus, the computer program product, or a portion thereof, are adapted or configured for use with a suitable and comparable manifestation of that type of device.

Where an embodiment is described as implemented in an application, the delivery of the application in a Software as a Service (SaaS) model is contemplated within the scope of the illustrative embodiments. In a SaaS model, the capability of the application implementing an embodiment is provided to a user by executing the application in a cloud infrastructure. The user can access the application using a variety of client devices through a thin client interface such as a web browser, or other light-weight client-applications. The user does not manage or control the underlying cloud infrastructure including the network, servers, operating systems, or the storage of the cloud infrastructure. In some cases, the user may not even manage or control the capabilities of the SaaS application. In some other cases, the SaaS implementation of the application may permit a possible exception of limited user-specific application configuration settings.

The present invention may be a system, a method, and/or a computer program product at any possible technical detail level of integration. The computer program product may include a computer readable storage medium (or media) having computer readable program instructions thereon for causing a processor to carry out aspects of the present invention.

The computer readable storage medium can be a tangible device that can retain and store instructions for use by an instruction execution device. The computer readable storage medium may be, for example, but is not limited to, an electronic storage device, a magnetic storage device, an optical storage device, an electromagnetic storage device, a semiconductor storage device, or any suitable combination of the foregoing. A non-exhaustive list of more specific examples of the computer readable storage medium includes the following: a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer readable storage medium, including but not limited to computer-readable storage devices as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer readable program instructions described herein can be downloaded to respective computing/processing devices from a computer readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers and/or edge servers. A network adapter card or network interface in each computing/processing device receives computer readable program instructions from the network and forwards the computer readable program instructions for storage in a computer readable storage medium within the respective computing/processing device.

Computer readable program instructions for carrying out operations of the present invention may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. The computer readable program instructions may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some embodiments, electronic circuitry including, for example, programmable logic circuitry, field-programmable gate arrays (FPGA), or programmable logic arrays (PLA) may execute the computer readable program instructions by utilizing state information of the computer readable program instructions to personalize the electronic circuitry, in order to perform aspects of the present invention.

Aspects of the present invention are described herein with reference to flowchart illustrations and/or block diagrams of methods, apparatus (systems), and computer program products according to embodiments of the invention. It will be understood that each block of the flowchart illustrations and/or block diagrams, and combinations of blocks in the flowchart illustrations and/or block diagrams, can be implemented by computer readable program instructions.

These computer readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer readable program instructions may also be stored in a computer readable storage medium that can direct a computer, a programmable data processing apparatus, and/or other devices to function in a particular manner, such that the computer readable storage medium having instructions stored therein comprises an article of manufacture including instructions which implement aspects of the function/act specified in the flowchart and/or block diagram block or blocks.

The computer readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions.

## Claims

1. A method comprising:
computing a central axis for a three-dimensional (3D) model,
generating a plurality of two-dimensional (2D) slices from the 3D model, the central axis passing through each of the plurality of 2D slices, and 2D points of the plurality of 2D slices corresponding to 3D points from the 3D model via a 2D point - 3D point correspondence;
computing 3D information about the 3D model by:
proposing for each 2D slice of the plurality of 2D slices, using a trained machine learning (ML) model, 2D information about the 2D slice using the 2D slice as input, to obtain a plurality of 2D information for the plurality of 2D slices, and
converting the plurality of 2D information to the 3D information about the 3D model based on the 2D point - 3D point correspondence.

2. The method of claim 1, wherein the 3D information about the 3D model comprises a portion of the 3D model that at least partially surrounds the central axis.

3. The method of claim 1, wherein the 3D information about the 3D model comprises a portion of the 3D model that at least fully surrounds the central axis.

4. The method of any claim 1, wherein the 2D information about the 2D slice comprises a measurable property of the 2D slice.

5. The method of any of claims 1-4, wherein the trained ML model is first trained using a plurality of 2D training slices obtained from 3D training models as training inputs and a plurality of 2D training information about the 2D training slices as training outputs.

6. The method of any of claims 1-4, further comprising locating a 3D cemento-enamel junction (CEJ) around a tooth by:
proposing 2D locations of the CEJ by the trained ML model, and
converting the 2D locations of the CEJ of the plurality of slices are to 3D locations of the CEJ around the central axis of the tooth using the 2D point - 3D point correspondence.

7. The method of any of claims 1-4, further comprising locating a 3D alveolar crest level (AC) around a tooth by:
proposing 2D locations of the AC by the trained ML model, and
converting the 2D locations of the AC of the plurality of slices are 3D locations of the AC around the central axis of the tooth using the 2D point - 3D point correspondence.

8. The method of any of claims 1-4, wherein a 3D periodontal bone loss (PBL) is generated by:
detecting of a 3D cemento-enamel junction (CEJ) around a tooth by: proposing 2D locations of the CEJ by the trained ML model, and converting the 2D locations of the CEJ of the plurality of slices are to 3D locations of the CEJ around the central axis of the tooth using the 2D point - 3D point correspondence;
detecting a 3D alveolar crest level (AC) around a tooth by: proposing 2D locations of the AC by the trained ML model, and converting the 2D locations of the AC of the plurality of slices are 3D locations of the AC around the central axis of the tooth using the 2D point - 3D point correspondence, and
generating a difference between the 3D CEJ and the 3D AC.

9. The method of claim 8, wherein a generation of the PBL further comprises computing for each pair of 2D locations of the CEJ and AC on a side of the tooth a distance between the pair in relation to the distance from the 2D CEJ location to a root tip of the tooth, and using the highest relative distance from the results as an indication of a maximum PBL

10. The method of any of claims 1-4, wherein the plurality of 2D information are converted to the 3D information by interpolating between adjacent 2D slices.

11. A computing apparatus comprising:
a processor; and
a memory storing instructions that, when executed by the processor, configure the apparatus to:
compute a central axis for a three-dimensional (3D) model,
generate a plurality of two-dimensional (2D) slices from the 3D model, the central axis passing through each of the plurality of 2D slices, and 2D points of the plurality of 2D slices corresponding to 3D points from the 3D model via a 2D point - 3D point correspondence;
compute 3D information about the 3D model by:
proposing for each 2D slice of the plurality of 2D slices, using a trained machine learning (ML) model, 2D information about the 2D slice using the 2D slice as input, to obtain a plurality of 2D information for the plurality of 2D slices, and converting the plurality of 2D information to the 3D information about the 3D model based on the 2D point - 3D point correspondence.

12. The computing apparatus of claim 11, wherein the 3D information about the 3D model comprises a portion of the 3D model that at least partially surrounds the central axis.

13. The computing apparatus of claim 12, wherein the 3D information about the 3D model comprises a portion of the 3D model that at least fully surrounds the central axis.

14. The computing apparatus of any of claims 11-13, wherein the processor is further configured to generate a 3D cemento-enamel junction (CEJ) around a tooth by:
proposing 2D locations of the CEJ by the trained ML model, and
converting the 2D locations of the CEJ of the plurality of slices are to 3D locations of the CEJ around the central axis of the tooth using the 2D point - 3D point correspondence.

15. The computing apparatus of any of claims 11-13, wherein the processor is further configured to generate a 3D alveolar crest level (AC) around a tooth by:
proposing 2D locations of the AC by the trained ML model, and
converting the 2D locations of the AC of the plurality of slices are 3D locations of the AC around the central axis of the tooth using the 2D point - 3D point correspondence.
